# EUROPÄISCHE PATENTSCHRIFT

(11) **EP 0 849 563 B1**
(45) Veröffentlichungstag und Bekanntmachung des Hinweises auf die Patenterteilung: **05.10.2005**
(21) Anmeldenummer: 97120432.6
(22) Anmeldetag: 21.11.1997
(51) Int. Cl.: G01C 21/20, G08G 1/0969

(54) **System zur bewerteten Fahrtroutenoptimierung**
System for weighted optimisation of itineraries
Système pour l'optimisation pondérée d'itinéraires

(30) Priorität: 19.12.1996 DE 19652781
(43) Veröffentlichungstag der Anmeldung: 24.06.1998
(73) Patentinhaber: Volkswagen Aktiengesellschaft, 38436 Wolfsburg (DE)
(72) Erfinder: Bergholz, Ralf, Dr., 38108 Braunschweig (DE)

(56) Entgegenhaltungen:
- EP-A- 0 587 892
- WO-A-92/08952
- DE-A- 4 118 970
- DE-A- 4 301 875
- US-A- 5 257 023

## Beschreibung

Die Erfindung bezieht sich auf eine Vorrichtung zur bewerteten Fahrtroutendarstellung mit einem Verkehrsinformationsempfänger gemäß dem Oberbegriff des Anspruchs 1 und auf ein Verfahren zur bewerteten Fahrtroutendarstellung gemäß dem Oberbegriff des Anspruchs 6.

Eine Vorrichtung zur bewerteten Fahrtroutendarstellung ist aus DE 40 08 460 bekannt. Mit der Vorrichtung nach dem genannten Stand der Technik wird bei der Bestimmung einer Route eines Landfahrzeugs zwischen einem Startort und einem Zielort die augenblickliche Verkehrslage berücksichtigt. Die augenblickliche Verkehrslage wird dabei aus Verkehrsinformationen ermittelt, die in geeignet kodierter Form öffentlich ausgestrahlt werden. Die Verkehrsinformationen sind dabei so kodiert, dass die wesentlichen Angaben wie Ortsnamen, Streckenabschnitte, Art der Behinderung etc. von dem automatischen System leicht erkannt werden können.

In der DE 43 01 875 A1 wird eine Verkehrsnavigationseinrichtung für ein Fahrzeug vorgeschlagen, die Daten von Straßenkarten gespeichert hat, die mindestens den Bewegungsbereich des Fahrzeugs abdecken. Die Einrichtung erfasst die aktuelle Position des Fahrzeugs und der Insasse legt zu umfahrende Stellen und das Ziel auf einer angezeigten Karte fest. Die Einrichtung sucht eine empfehlenswerte Strecke, die die aktuelle Position und das Ziel unter Umfahrung der bezeichneten Umgehungsstrecken verbindet. Die Einrichtung zeigt die empfehlenswerte Strecke auf der Karte in Relation zu der aktuellen Fahrzeugposition an.

Aus der US 5 257 023 ist zudem die Anzeige einer Verkehrsbelastung auf einer Karte bekannt.

Es ist die Aufgabe der Erfindung eine verbesserte Vorrichtung zur bewerteten Fahrtroutendarstellung anzugeben.

Diese Aufgabe wird mit einer Vorrichtung zur bewerteten Fahrtroutendarstellung nach Anspruch 1 gelöst.

Ebenso wird diese Aufgabe mit einem Verfahren zur bewerteten Fahrtroutendarstellung nach Anspruch 6 gelöst.

Die erfindungsgemäße Vorrichtung umfasst einen Verkehrsinformationsempfänger zum Empfangen von geeignet verschlüsselten Verkehrsnachrichten, in denen Informationen über die augenblickliche Verkehrslage enthalten sind, die von der Vorrichtung automatisch erkannt werden können. Die Auswertung der Verkehrsinformationen erfolgt in einer Steuereinheit. Die erfindungsgemäße Vorrichtung weist einen Kartenspeicher auf, d. h. eine Vorrichtung zum Abspeichern von Karten im voraus. In dieser Speichervorrichtung sind Karten der unmittelbaren und der weiteren Umgebung des momentanen Aufenthaltsortes des Fahrzeugs in Form verschiedener Ausschnitte gespeichert. Zur Darstellung der Karten umfasst die erfindungsgemäße Vorrichtung noch einen Bildschirm zur Anzeige der Karte und der darin eingetragenen Routen als Linien. Zusätzlich sind in den Karten die aus den Verkehrsinformationen abgeleiteten, graphisch dargestellten Verkehrsstörungen dargestellt.

Die Vorrichtung zur bewerteten Fahrtroutendarstellung umfasst zudem eine Bewertungseinrichtung zum Ermitteln von Parametern der mindestens einen Fahrtroute und Ausgabe eines entsprechenden Bewertungssignals an die Steuereinheit. Es werden mehrere Alternatiworschläge einer Routenführung dem Fahrer von der Vorrichtung vorgeschlagen; damit der Fahrer nicht ohne Entscheidungshilfe zwischen den Alternativen wählen muss, werden zusätzlich zu der Darstellung der Route auf der Karte auf dem Bildschirm die unterschiedlichen Routenvorschläge mit den ermittelten Parametern versehen. Diese Parameter sind z. B. Länge der vorgeschlagenen Route, Steigungen und zu überwindende Höhenmeter auf der Route usw. Zur besseren Unterscheidbarkeit werden die verschiedenen Routenvorschläge auch graphisch voneinander unterschiedlich dargestellt. Damit kann sich der Fahrer bereits am Beginn der Fahrt einen Überblick über die Route verschaffen und kann sich später auf die Fahrt an sich konzentrieren, was zur Erhöhung der Fahrsicherheit beiträgt.

In einer bevorzugten Ausführungsform der Vorrichtung werden neben den aktuellen Verkehrshinweisen, die während der Fahrt von der Vorrichtung empfangen werden, auch solche Verkehrsnachrichten berücksichtigt, die bereits vor Beginn der Fahrt ausgestrahlt wurden. Dazu bleibt die erfindungsgemäße Vorrichtung beim Abstellen des Fahrzeugs in einem sog. "stand by"-Betrieb, so dass sie ausgestrahlte Verkehrsnachrichten weiterhin empfangen und verarbeiten, d. h. zwischenspeichern kann. Beim Start des Fahrzeuges werden dann die zwischengespeicherten Verkehrsinformationen bei der Evaluierung der günstigsten Fahrtroute berücksichtigt.

Eine bevorzugte Ausführungsform der Vorrichtung umfasst einen Ortungsempfänger zum Erfassen der Koordinaten des momentanen Aufenthaltsortes des Empfängerfahrzeuges. Sie umfasst ferner eine Eingabevorrichtung, über die der Fahrer seinen Zielwunsch eingeben kann. Aus momentanem Aufenthaltsort und eingegebenem Zielort errechnet die Vorrichtung mindestens einen Routenvorschlag, den das Fahrzeug im günstigsten Fall befolgt. Von diesem günstigsten Routenvorschlag muss dann abgewichen werden, wenn auf der vorgeschlagenen Fahrtroute temporäre Hindernisse wie Stau, Baustellen, Glatteis und dgl. mehr auftreten. In diesem Fall müssen von der Vorrichtung Ersatzrouten angegeben werden, auf denen das Ziel erreicht werden kann.

Zum besseren Verständnis der Erfindung wird im folgenden ein Ausführungsbeispiel der erfindungsgemäßen Vorrichtung zur bewerteten Fahrtroutendarstellung und des erfindungsgemäßen Verfahrens beschrieben.

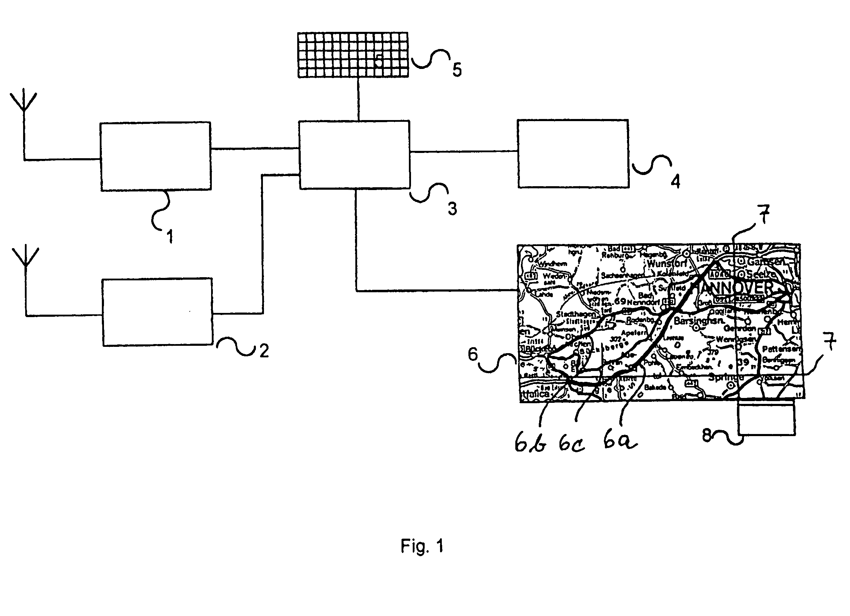

In Fig. 1 ist der prinzipielle Aufbau der erfindungsgemäßen Vorrichtung zur bewerteten Fahrtroutendarstellung mit Ortungsempfänger 1 und Eingabevorrichtung 5 dargestellt.

Die erfindungsgemäße Vorrichtung zur bewerteten Fahrtroutendarstellung umfasst einen Verkehrsnachrichtenempfänger, eine Steuereinheit sowie einen Kartenspeicher und eine Anzeigevorrichtung, auf der die allgemeine Verkehrssituation (farbig) dargestellt wird. Im folgenden wird eine bevorzugte Ausführungsform beschrieben, die zusätzlich über einen Ortungsempfänger und eine "intelligente" Steuereinheit verfügt, mit welcher Ausführungsform der erfindungsgemäßen Vorrichtung auch automatisch ein Routenvorschlag bereits erarbeitet werden kann.

Mit dem Ortungsempfänger 1 der in Fig. 1 dargestellten Ausführungsform lässt sich die genaue Position des Fahrzeugs zu jedem Zeitpunkt feststellen. Die z. Z. gebräuchlichste Ausführung solcher Ortungsempfänger beruhen auf dem GPS-Satellitensystem. Von den Satelliten dieses Systems müssen jeweils mindestens drei (für die Bestimmung zweier Koordinaten in der Ebene), vorzugsweise aber vier (für die Bestimmung von drei Koordinaten, also auch der Vertikalen) Satelliten am Himmel "zu sehen" sein. Es sind aber auch andere, bodengestützte Systeme zur Bestimmung der Position geeignet. Mit den von dem Ortungsempfänger 1 ausgegebenen Koordinaten kann die Steuereinheit 2 den Aufenthaltsort des Fahrzeuges auf einer Karte lokalisieren und so eine Fahrtroute planen und überwachen bzw. laufend aktualisieren. Dies wird im einzelnen weiter unten erläutert.

Neben dem Ortungsempfänger 1 umfaßt die Vorrichtung außerdem als zweiten Empfänger einen Verkehrsnachrichtenempfänger 2. Dies kann im wesentlichen ein gewöhnliches Autoradio sein, das über einen speziellen (nicht dargestellten) Dekoder verfügt. Mit diesem Dekoder werden die in den Verkehrsnachrichten enthaltenen, eventuell nicht hörbaren, automatisch erkennbaren Informationen entschlüsselt und zur Weiterverarbeitung an eine Steuereinheit 3 weitergeleitet. Dabei können die an die Steuereinheit übertragenen Signale insbesondere je nach Bedeutung der Informationen unterschieden werden. So kann ein Stau auf der längenmäßig günstigsten Fahrtroute diese Fahrtroute gänzlich ausschließen. Dagegen macht die Meldung "zähfließender Verkehr" die längenmäßig günstigste Fahrtroute nur etwas weniger günstig als eine andere Fahrtroute, bei der man dafür große Steigungen zu berücksichtigen hätte. Die Auswahl der letztlich am geeignetsten erscheinenden Fahrtroute, die dann von der Vorrichtung dem Fahrer vorgeschlagen wird, erfolgt in der Steuereinheit und wird weiter unten noch ausführlicher beschrieben. Ist der Verkehrsempfänger so ausgelegt, daß er bereits eine Wichtung der Verkehrsinformationen nach ihrer Bedeutung vornimmt, so überträgt er neben der eigentlichen Verkehrsinformation auch ein entsprechendes Zusatzsignal zur Kategorisierung der Information. Erfolgt die gesamte Auswertung der Verkehrsnachrichten in der Steuereinheit 3, so entfallen Zusatzsignale zwischen Verkehrsempfänger 2 und Steuereinheit 3.

Die Vorrichtung zur Optimierung der Fahrtroute umfaßt einen Kartenspeicher 4 für einen digitalisierten Atlas, d. h. eine Folge von digitalisierten Karten, anhand derer die günstigste Fahrtroute aus Startort und Zielort bestimmt werden kann. Diese Karten können in verschiedenen Maßstäben und in verschiedenen Ausschnitten abgelegt sein. Sie können einmal für einen langen Zeitraum abgespeichert werden oder je nach Bedarf von dem Fahrer des Fahrzeugs eingespeist werden, z. B. mit einer speziellen Chipkarte oder mit einer CD oder weiteren Speichermedien. Je nach augenblicklichem Aufenthaltsort des Fahrzeugs, der durch den Ortungsempfänger 1 erfaßt wird, greift die Steuereinheit 3 auf eine Karte oder einen Kartenausschnitt in dem Kartenspeicher 4 zu und ermittelt anhand der Karte ein oder mehrere mögliche Fahrtrouten zwischen augenblicklichem Aufenthaltsort und Zielort des Fahrzeugs.

Zur Eingabe von Zielort und eventuell anderen Parametern, wie gewünschter Reisezeit oder Vorgaben für Benzinverbrauch, ist eine Eingabevorrichtung 5 vorgesehen. Dies kann eine Eingabetastatur sein oder - wie weiter unten beschrieben wird - eine Positionszeigereinrichtung 7 mit Wähltaste 8.

Die Steuereinheit 3 ermittelt (Schritt S1) zunächst beim Starten den augenblicklichen Aufenthaltsort des Fahrzeugs über den Ortungsempfänger 1. Daraufhin (Schritt 2) prüft die Steuereinheit 3, ob über eine Eingabevorrichtung 5 ein Zielort eingegeben wurde. Ist dies nicht der Fall, so begibt sich die Steuereinheit in einen Wartezustand, der dann endet, wenn eine Eingabe über die Eingabevorrichtung 5 erfolgt. In diesem Wartezustand erfolgt permanent die Darstellung der Karten auf einer Anzeigevorrichtung, auf denen die aus den Verkehrsinformationen abgeleiteten Verkehrsstörungen graphisch dargestellt bzw. eingetragen sind. Mit anderen Worten, bei negativer Antwort auf die Abfrage in Schritt S3 springt das Verfahren zu einem Schritt S5, der weiter unten erläutert werden wird, und kehrt nach dessen Erledigung nach weiteren Schritten zu der Abfrage S3 zurück. Die Reihenfolge der beiden Schritte S1 und S2 kann selbstverständlich aber auch umgekehrt sein, d. h. es kann zuerst geprüft werden, ob eine Eingabe erfolgt ist, und erst dann der momentane Aufenthaltsort erfaßt werden. Ist der Zielort und der momentane Aufenthaltsort oder Startpunkt bekannt, so prüft die Steuereinheit 3 die in einem (nicht dargestellten) Zwischenspeicher in dem Verkehrsempfänger oder in der Steuereinheit 3 selbst abgelegten Verkehrsinformationen (Schritt S3) und ermittelt mindestens einen ersten Routenvorschlag (Schritt S4). Dieser erste Routenvorschlag kann auch ohne Berücksichtigung von vor dem Start des Verfahrens ausgestrahlten Verkehrsinformationen ermittelt werden, wenn die Vorrichtung nicht mit einem Zwischenspeicher ausgerüstet ist. Es können jedoch auch von vornherein mehrere Routenvorschläge von der Steuereinheit ermittelt werden und als Alternativen dargestellt werden. Diese können farblich oder in Strichstärke oder -form voneinander unterschieden werden. Die Routenvorschläge bzw. die aus den Verkehrsinformationen abgeleiteten Verkehrsstörungen (Sprung von S3) werden auf einer Anzeigevorrichtung 6 dargestellt (Schritt S5) springt die Steuereinheit 3 zu der Abfrage des Aufenthaltsortes (Schritt S1) zurück und arbeitet die obigen Verfahrensschritte erneut ab. Mit anderen Worten, während der Fahrt überwacht die Steuereinheit 3 fortlaufend die Position des Fahrzeugs und paßt gegebenenfalls die geplante Fahrtroute den neuen Gegebenheiten an. Das bedeutet, daß nach einer gewissen, vom Fahrzeug zurückgelegten Strecke eine oder einige der vorher möglichen Strecken ausgeschlossen werden können und somit nicht mehr angezeigt werden müssen. Stellt die Vorrichtung fest, daß sich das Fahrzeug entgegen der Zieleingabe durch den Fahrer vom Ziel entfernt, anstatt sich ihm zu nähern, so kann sie den Fahrer mit optischen und/oder akustischen Warnsignalen darauf aufmerksam machen oder sich abschalten. Stellt die Vorrichtung fest, daß der Zielort erreicht ist (Schritt S6), so schaltet sie sich automatisch ab.

Die Darstellung der Routenvorschläge erfolgt auf einer Anzeigevorrichtung 6 in Form von Linien auf einer Karte. Die Anzeigevorrichtung ist vorzugsweise eine LCD-Bildschirm, dann aber auch eine Kathodenstrahlröhre o. ä. sein. Die Linien auf der Anzeigevorrichtung in Fig. 1 sind mit 6a, 6b und 6c bezeichnet. Bei der Auswahl der Fahrtroute, die dem Fahrer von der Vorrichtung vorgeschlagen wird, berücksichtigt die Steuereinheit u. a. die Länge der Strecke, die erwartete Fahrzeit und eventuell Steigungen, die insbesondere im Winter die "Wertigkeit" einer Fahrtroute stark beeinträchtigen können. Dies von einer gesondert vorgesehenen (nicht dargestellte) Bewertungsvorrichtung ermittelten Bewertungskriterien können als zusätzliche Parameter mit auf der Anzeigevorrichtung 6 angegeben werden, so z. B. in einem eigenen Feld auf dem Bildschirm, wobei die Angaben in derselben Farbe wie der Routenvorschlag dargestellt sind. So kann z. B. die kürzeste Strecke rot, die Strecke mit der kürzesten zu erwartenden Reiszeit blau, die Strecke mit dem günstigsten Kraftsoffverbrauch grün usw. dargestellt werden. Die Länge der Stecke, die erwartete Reisezeit und der erwartete Kraftstoffverbrauch kann zusätzlich in einem eigenen Feld mit angegeben werden.

Daneben ist es auch möglich, die gefilterten und entschlüsselten Verkehrsinformationen in Form von Symbolen auf der Karte darzustellen. Es können also auf der Karte auf einer - nicht unbedingt für die eigene Rote unmittelbar bedeutsamen - Strecke z. B. Verkehrsstaus oder Baustellen angezeigt werden. Dies hat den Vorteil, daß der Fahrer aus diesen Angaben Rückschlüsse ziehen kann auf dadurch bedingtes erhöhtes Verkehrsaufkommen auf seiner Route, ohne daß dies bereits zu Verkehrsmeldungen geführt hat.

Um die Eingabe für den Fahrer zu vereinfachen und um weitere Start- und Zielorte einfach und bequem eingeben zu können, kann die Anzeigevorrichtung 6 insbesondere mit einer Positionszeigereinrichtung 7 versehen sein. Diese ist vorzugsweise ein auf dem Bildschirm bewegliches Fadenkreuz 7, das sich über eine Wähltaste 8 ansteuern läßt. Vorzugsweise ist die Wähltaste 8 in zwei Richtungen drehbar und kann durch Druck auf sie einen Schalter betätigen ("Trackball"). Entsprechend einer Computermaus können durch Einstellen des Fadenkreuzes 7 auf einen Punkt auf der Karte und Betätigen (Drücken) der Wähltaste 8 Start- und Zielort eingegeben werden. Ferner können über ein Menü weitere Funktionen der Vorrichtung gesteuert werden.

### Bezugszeichenliste

- 1: Ortungsempfänger
- 2: Verkehrsinformationsempfänger
- 3: Steuereinheit
- 4: Kartenspeicher
- 5: Eingabevorrichtung
- 6: Anzeigevorrichtung
- 6a: erste Fahrtroute
- 6b: zweite Fahrtroute
- 6c: dritte Fahrtroute
- 7: Positionszeigereinrichtung
- 8: Wähltaste

## Patentansprüche

1. Vorrichtung zur bewerteten Fahrtroutendarstellung mit:
einem Verkehrsinformationsempfänger (2) zum Empfangen von Verkehrsinformationen;
einer Steuereinheit (3) zum Aufbereiten der empfangenen Verkehrsinformationen;
einem Kartenspeicher (4) zum Abspeichern von Karten;
einer Anzeigevorrichtung (6) mit Bildschirm zur Darstellung der Karten und der darin eingetragenen Fahrtrouten mit aus den Verkehrsinformationen abgeleiteten, graphisch dargestellten Verkehrsstörungen (6a, 6b, 6c); und
einer Bewertungseinrichtung zum Ermitteln von Parametern der mindestens einen Fahrtroute und Ausgabe eines entsprechenden Bewertungssignals an die Steuereinheit
**dadurch gekennzeichnet, daß**
die Anzeigevorrichtung (6) derart ausgebildet ist, daß mehrere alternative Fahrtrouten auf dem Bildschirm darstellbar sind, wobei die Fahrtrouten entsprechend ihrer Parameter graphisch voneinander unterschieden werden.

2. Vorrichtung zur bewerteten Fahrtroutendarstellung nach Anspruch 1, **dadurch gekennzeichnet, daß** die auf dem Bildschirm dargestellten alternativen Fahrtrouten farblich voneinander unterschieden werden und der Bildschirm ein eigenes Feld zum Anzeigen der Parameter der Fahrtrouten aufweist, wobei die Parameter in derselben Farbe wie die zugehörige Fahrtroute darstellbar sind.

3. Vorrichtung zur bewerteten Fahrtroutendarstellung nach Anspruch 1, **gekennzeichnet durch** einen Zwischenspeicher zum Abspeichern von während des Stillstandes des Fahrzeugs empfangenen Verkehrsinformationen.

4. Vorrichtung zur bewerteten Fahrtroutendarstellung nach einem der vorangehenden Ansprüche, **gekennzeichnet durch** einen Ortungsempfänger (1) zum Erfassen der Koordinaten des momentanen Aufenthaltsortes des Fahrzeugs, einer Eingabevorrichtung (5) für die Eingabe von einem Endpunkt einer Fahrtroute des Fahrzeugs und **dadurch**, daß die Steuereinheit (3) zum Aufbereiten der empfangenen Verkehrsinformationen eine Fahrtroute aus dem eingegebenen Endpunkt und dem momentanen Aufenthaltsort des Fahrzeugs ermittelt und angezeigt.

5. Vorrichtung zur bewerteten Fahrtroutendarstellung nach einem der vorangehenden Ansprüche, **gekennzeichnet durch** eine Positionszeigereinrichtung (7) mit Wähltaste (8) zur Darstellung einer Positionsmarkierung auf dem Bildschirm und zur Eingabe der Position **durch** Betätigung der Wähltaste (8).

6. Verfahren zur bewerteten Fahrtroutendarstellung mit den Schritten:
Empfangen (S3) und Abspeichern einer Folge von Informationen von einem Verkehrsinformationsempfänger (2);
Ermitteln (S4) von Verkehrsstörungen aus dem empfangenen Verkehrsinformationen;
Ausgeben (S5) von Karten aus einem Kartenspeicher (4) zum Abspeichern von Karten und der darin eingetragenen Fahrtrouten mit aus den Verkehrsinformationen abgeleiteten, graphisch dargestellten Verkehrsstörungen (6a, 6b, 6c) auf einem Bildschirm einer Anzeigevorrichtung (6);
Ermitteln von Parametern der Fahrtrouten und Bewerten der Fahrtrouten nach ihren Parametern;
**dadurch gekennzeichnet, daß** mehrere Fahrtrouten graphisch unterschiedlich auf dem Bildschirm dargestellt werden, wobei die Art der graphischen Darstellung und die Bewertung korreliert sind.

7. Verfahren nach Anspruch 6, **dadurch gekennzeichnet, daß** die Fahrtrouten farblich unterschiedlich auf dem Bildschirm dargestellt werden und ihre Parameter in derselben Farbe wie die zugehörigen Fahrtrouten ebenfalls auf dem Bildschirm dargestellt werden.

8. Verfahren nach Anspruch 6 oder 7, **dadurch gekennzeichnet, daß** die ermittelten Fahrtrouten nach Länge des Weges und der aufgrund der Bewertung der Verkehrsinformationen erwarteten Reisezeit bewertet werden.

9. Verfahren nach einem der Ansprüche 6 bis 8, **dadurch gekennzeichnet, daß** die empfangenen Verkehrsinformationen nach Bedeutung ("Stau", "zähfließender Verkehr", "Baustelle", "überfrierende Nässe", ......) bewertet werden.

10. Verfahren nach einem der vorangehenden Ansprüche, **gekennzeichnet durch** das Erfassen (S1) der Koordinaten des momentanen Aufenthaltsortes des Fahrzeugs mit einem Ortungsempfänger (1), Erfassen (S2) von einem Endpunkt einer Fahrtroute des Fahrzeugs
mit eine Eingabevorrichtung (5) für den Fahrer, Ermitteln wenigstens einer Fahrtroute aus dem eingegebenen Endpunkt und dem momentanen Aufenthaltsort des Fahrzeugs und Ausgeben (S5) der Karte mit Fahrtrouten auf einem Bildschirm.

## Claims

1. Device for displaying routes in a weighted fashion, having:
a traffic information receiver (2) for receiving traffic information; a control unit (3) for conditioning the received traffic information; a map memory (4) for storing maps; a display device (6) with a screen for displaying maps and the routes entered therein with graphically displayed traffic disruption (6a, 6b, 6c) derived from the traffic information; and a weighting device for determining parameters of the at least one route and outputting a corresponding weighting signal to the control unit; **characterized in that** the display device (6) is embodied in such a way that a plurality of alternative routes can be displayed on the screen, with the routes being distinguished from one another graphically in accordance with their parameters.

2. Device for displaying routes in a weighted fashion according to Claim 1, **characterized in that** the alternative routes which are displayed on the screen are differentiated from one another by colour and the screen has its own field for displaying the parameters of the routes, it being possible to display the parameters in the same colour as the associated route.

3. Device for displaying routes in a weighted fashion according to Claim 1, **characterized by** a buffer for storing traffic information received while the vehicle is stationary.

4. Device for displaying routes in a weighted fashion according to one of the preceding claims, **characterized by** a locating receiver (1) for registering the coordinates of the instantaneous location of the vehicle, an input device (5) for inputting an end point of a route of the vehicle, and in that, in order to condition the received traffic information, the control unit (3) determines and displays a route from the end point which has been input and the instantaneous location of the vehicle.

5. Device for displaying routes in a weighted fashion according to one of the preceding claims, **characterized by** a position pointer device (7) with a selector key (8) for displaying a position mark on the screen and for inputting the position by actuating the selector key (8).

6. Method for displaying routes in a weighted fashion, having the steps:
a sequence of information is received (S3) and stored by a traffic information receiver (2);
traffic disruption is determined (S4) from the received traffic information;
maps are output (S5) from a map memory (4) for storing maps and the routes entered in them with traffic disruption (6a, 6b, 6c) which is derived from the traffic information and displayed graphically, on a screen of a display device (6);
parameters of the routes are determined and the routes are weighted according to their parameters;
**characterized in that** a plurality of routes are displayed differently in graphic terms on the screen, with the type of graphic display and the weighting being correlated.

7. Method according to Claim 6, **characterized in that** the routes are displayed differently in terms of colour on the screen and their parameters are also displayed on the screen, in the same colour as the associated routes.

8. Method according to Claim 6 or 7, **characterized in that** the routes which are determined are weighted according to their length and the travel time which is expected on the basis of the weighting of the traffic information.

9. Method according to one of Claims 6 to 8, **characterized in that** the received traffic information is weighted according to the importance ("traffic jam", "slow moving traffic", "roadworks", "black ice", ...).

10. Method according to one of the preceding claims, **characterized by** the registration (S1) of the coordinates of the instantaneous location of the vehicle by means of a locating receiver (1), registration (S2) of an endpoint of a route of the vehicle by means of an input device (5) for the driver, determination of at least one route from the endpoint which has been input and the instantaneous location of the vehicle, and outputting (S5) of the map with routes on a screen.

## Revendications

1. Dispositif pour la représentation pondérée d'itinéraires avec : un récepteur d'informations de trafic (2) pour recevoir des informations sur le trafic ; une unité de commande (3) pour traiter les informations de trafic reçues ; une mémoire des cartes (4) pour mémoriser des cartes ; un dispositif d'affichage (6) avec un écran pour représenter les cartes et les itinéraires qui y sont inscrits avec les perturbations de trafic déduites des informations de trafic représentées graphiquement (6a, 6b, 6c) ; et un dispositif de pondération pour déterminer des paramètres d'au moins un itinéraire et fourniture d'un signal de pondération correspondant vers l'unité de commande ; **caractérisé en ce que** le dispositif d'affichage (6) est réalisé de telle sorte que plusieurs itinéraires alternatifs puissent être représentés sur l'écran, les itinéraires se différenciant graphiquement les uns des autres en fonction de leurs paramètres.

2. Dispositif pour la représentation pondérée d'itinéraires selon la revendication 1, **caractérisé en ce que** les itinéraires alternatifs représentés sur l'écran sont différenciés les uns des autres par leur couleur et que l'écran comporte un champ propre pour l'affichage des paramètres des itinéraires, les paramètres pouvant être représentés dans la même couleur que l'itinéraire correspondant.

3. Dispositif pour la représentation pondérée d'itinéraires selon la revendication 1, **caractérisé par** une mémoire intermédiaire pour mémoriser les informations de trafic reçues pendant l'arrêt du véhicule.

4. Dispositif pour la représentation pondérée d'itinéraires selon une des revendications précédentes, **caractérisé par** un récepteur de repérage (1) pour enregistrer les coordonnées de la localisation instantanée du véhicule, un dispositif de saisie (5) pour saisir la destination d'un itinéraire du véhicule et qu'ainsi, l'unité de commande (3) détermine et affiche un itinéraire à partir de la destination saisie et de la localisation instantanée du véhicule pour traiter les informations de trafic reçues.

5. Dispositif pour la représentation pondérée d'itinéraires selon une des revendications précédentes, **caractérisé par** un équipement de visualisation de la position (7) avec touche de sélection (8) pour la représentation d'une marque de position sur l'écran et pour saisir la position en actionnant la touche de sélection (8).

6. Procédé pour la représentation pondérée d'itinéraires avec les étapes suivantes :
réception (S3) et mémorisation d'une succession d'informations par un récepteur d'informations de trafic (2) ; détermination (S4) de perturbations de trafic à partir des informations de trafic reçues ; fourniture (S5) de cartes à partir d'une mémoire de cartes (4) pour mémoriser des cartes et des itinéraires qui y sont inscrits avec les perturbations de trafic déduites des informations de trafic représentées graphiquement (6a, 6b, 6c) sur un écran d'un dispositif d'affichage (6) ;
détermination de paramètres des itinéraires et pondération des itinéraires en fonction de leurs paramètres; **caractérisé en ce que** plusieurs itinéraires sont représentés sur l'écran de manière graphiquement distincte, le type de la représentation graphique et la pondération étant corrélés.

7. Procédé selon la revendication 6, **caractérisé en ce que** les itinéraires sont représentés sur l'écran en se différenciant par leur couleur et que leurs paramètres sont également représentés sur l'écran dans la même couleur que les itinéraires correspondants.

8. Procédé selon la revendication 6 ou 7, **caractérisé en ce que** les itinéraires déterminés sont pondérés en fonction de la longueur du trajet et de la durée attendue du voyage basée sur la pondération des informations de trafic.

9. Procédé selon une des revendication 6 à 8, **caractérisé en ce que** les informations de trafic reçues sont pondérées en fonction de leur signification ("bouchon", "ralentissement", "travaux", "risque de verglas", ...).

10. Procédé selon une des revendications précédentes, **caractérisé par** l'enregistrement (S1) des coordonnées de la localisation instantanée du véhicule avec un récepteur de repérage (1), la saisie (S2) d'une destination d'un itinéraire du véhicule avec un dispositif de saisie (5) pour le conducteur, la détermination d'au moins un itinéraire à partir de la destination saisie et de la localisation instantanée du véhicule et fourniture (S5) de la carte avec les itinéraires sur un écran.
